# EUROPÄISCHE PATENTSCHRIFT

(11) **EP 1 712 200 B1**
(45) Veröffentlichungstag und Bekanntmachung des Hinweises auf die Patenterteilung: **10.04.2013**
(21) Anmeldenummer: 06003088.9
(22) Anmeldetag: 15.02.2006
(51) Int. Cl.: A61C 3/14

(54) **Zahnzange**
Dental forcep
Pince pour dent

(30) Priorität: 11.04.2005 DE 202005005722 U
(43) Veröffentlichungstag der Anmeldung: 18.10.2006
(73) Patentinhaber: Helmut Zepf Medizintechnik GmbH, 78606 Seitingen-Oberflacht (DE)
(72) Erfinder: Zepf, Helmut, 78606 Seitingen-Oberflacht (DE)
(74) Vertreter: Mussgnug, Bernd

(56) Entgegenhaltungen:
- CH-A- 293 561
- DE-U1- 8 512 734
- US-A- 2 497 229

## Beschreibung

Die Erfindung betrifft eine Zahnzange gemäß dem Oberbegriff des Anspruchs 1.

Bekannt sind Zahnzangen mit zwei Gelenkteilen, welche über eine Drehachse miteinander verbunden sind. Dabei weist jedes Gelenkteil an einem Ende jeweils ein Griffelement und an seinem anderen Ende jeweils ein Arbeitsende mit einer Innenfläche und einer Außenfläche auf. Die Innenfläche weist eine quer zur Längsachse verlaufende Riffelung auf, welche dazu dient, die Zähne besser greifen zu können. Die bekannten Zahnzangen weisen weiterhin in der Innenfläche ausgehend von dem distalen Ende des Arbeitsendes eine entlang der Längsachse des Arbeitsendes verlaufende Längsrinne mit einem bestimmten Krümmungsradius, der jedoch vergleichsweise groß ist, so dass die Längsrinne nur sehr leicht konkav gekrümmt und fast eben ist. Wird ein Zahn mit der Zahnzange gegriffen, umschließt die Mulde den Zahn nicht vollständig, sondern der Zahn wird von der flachen Längsrinne nur punktweise erfasst. Dadurch ergibt sich beim Luxationsvorgang eine reitende Bewegung, bei welcher der Zahn nicht ruhig in der Zahnzange liegt und welche Beschädigungen des Zahns beim Luxationsvorgang, insbesondere Kronen- und Wurzelfrakturen, hervorrufen kann.

Eine Zahnzange gemäß dem Oberbegriff des Anspruchs 1 ist aus dem Gebrauchsmuster DE 8 512 734 U bekannt.

Die Aufgabe der Erfindung besteht daher darin, eine Zahnzange bereitzustellen, mit welcher ein schonenderer Luxationsvorgang ermöglicht wird. Insbesondere besteht die Aufgabe der Erfindung darin, eine Zahnzange bereitszustellen, bei welcher der Zahn ruhig in der Zahnzange liegt, wodurch Beschädigungen beim Luxationsvorgang ausgeschlossen werden.

Die Aufgabe der Erfindung wird gelöst durch eine Zahnzange mit den kennzeichnenden Merkmalen des Anspruchs 1.

Vorteilhafte Ausgestaltungen und Weiterbildungen der Erfindung sind in den Unteransprüchen angegeben.

Die erfindungsgemäße Zahnzange ist derart ausgebildet, dass ausgehend von dem distalen Ende in der Längsrinne zumindest abschnittsweise eine Mulde angeordnet ist, deren Krümmungsradius kleiner ist als der Krümmungsradius der Längsrinne. Diese zusätzliche Mulde ist durch den kleineren Krümmungsradius so geformt, dass ein flächiges Anliegen der Innenfläche der Mulde an die konvex geformte Außenfläche der Zähne möglich ist. Dadurch ergibt sich nicht nur eine punktförmige Auflagefläche zwischen Zahnzange und Zahn, sondern eine flächige, welche einen besseren Kontakt zwischen Zahnzange und Zahn ermöglicht, so dass der Zahn bei der Luxationsbewegung fest gehalten wird und eine reitende Bewegung vermieden wird.

Bei einer vorteilhaften Weiterbildung der Erfindung entspricht der Krümmungsradius der Mulde etwa dem Krümmungsradius eines Zahnes. Die Innenfläche der Zahnzange wurde somit entsprechend den anatomischen Gegebenheiten der Zähne ausgestaltet. Insbesondere entspricht die konkav geformte Mulde der konvexen Kronenform des zu ziehenden Zahnes, wodurch sich ein optimaler Kontakt zwischen Zahnzange und Zahn ergibt, was einen schonenderen Luxationsvorgang ermöglicht.

Erfindungsgemäß verläuft die Mulde jedoch nur etwa über ein Drittel der Länge der Längsrinne. Die Mulde erstreckt sich somit nicht über den gesamten Bereich des Arbeitsendes der Zahnzange, was nicht nötig ist, da in der Regel nur mit dem vorderen Drittel des Arbeitsendes der zu extrahierende Zahn gefasst wird.

Vorzugsweise weist die Mulde einen ellipsiodförmigen Übergang zur Längsrinne auf. Dadurch werden scharfe Kanten und Übergänge vermieden, die den zu extrahierenden Zahn beschädigen könnten.

Bei einer besonders bevorzugten Ausgestaltung der Erfindung entspricht die Breite der Mulde etwa der Breite eines Zahnes. Die Mulde umschließt somit den Zahn vollständig, wodurch ein besonders guter Kontakt zwischen der Zahnzange und dem Zahn gewährleistet wird. Um der unterschiedlichen Größe der Zähne wie Schneidezähnen, Kleinbackenzähnen, Großbackenzähnen und Weisheitszähnen Rechnung tragen zu können, können mehrere Zahnzangen bereit gestellt werden, bei denen die Mulden den durchschnittlichen Größen der entsprechenden Zähne entsprechend unterschiedliche Breiten aufweisen.

Bei einer vorteilhaften Weiterbildung der Erfindung weisen die Längskanten der Mulde einen Wellenschliff auf. Bei Drehbewegungen um die Längsachse des Zahnes, wie sie in der Regel bei einem Luxationsvorgang ausgeführt werden, greift der Wellenschliff in den Zahn ein und sichert somit zusätzlich den festen Sitz des Zahnes in der Zahnzange.

Vorzugsweise weisen die Zacken des Wellenschliffs einen Abstand von etwa 1 mm auf. Dieser Abstand ist größer als der sonst übliche Abstand der Zacken bei einer Riffelung, so dass die Zacken gegebenenfalls zusätzlich an dem Zahn angreifen können, um den Luxationsvorgang zu erleichtern.

Vorteilhafterweise verläuft der Wellenschliff am Rand der Mulde in die Mulde hinein. Damit wird einerseits ein Übergang ohne scharfe Kanten vermieden, welcher die Zähne unnötig beschädigen und Frakturen verursachen könnte. Andererseits greifen somit die Zacken des Wellenschliffs bei Drehbewegungen um die Längsachse des Zahnes schneller und sicherer ein, wodurch der sichere Sitz des Zahnes in der Zahnzange weiter verbessert wird.

Bei einer besonders bevorzugten Ausbildung der Erfindung ist die Zahnzange als Wurzelzange ausgebildet. Dazu ist die Mulde besonders schmal, bspw. nur etwa 2 mm breit ausgebildet. Dadurch bedingt kann auch das Arbeitsende selbst sehr schlank ausgestaltet werden. Mit einer derartigen Zahnzange können auch abgebrochene Wurzelspitzen, Sequester oder sonstige Fremdkörper sicher aus der Alveole entfernt werden, ohne die Alveole zu beschädigen.

Vorzugsweise ist das Arbeitsende gegenüber der Längsachse der Gelenkteile um 45 bis 90 Grad abgebogen. Dies ermöglicht ein einfacheres Einführen der Zahnzange in die Mundhöhle und einen verbesserten Zugang zum zu extrahierenden Zahn bzw. zu zu entfernenden Wurzelspitzen oder Zahnsplittern.

Ein Ausführungsbeispiel der Erfindung wird anhand der nachfolgenden Figuren ausführlich erläutert. Es zeigt
- Figur 1: eine perspektivische Ansicht eines Ausführungsbeispiels einer erfindungsgemäßen Zahnzange,
- Figur 2: eine Draufsicht auf die Zahnzange gemäß Figur 1,
- Figur 3: eine Seitenansicht der Zahnzange gemäß Figur 1 und
- Figur 4: eine Draufsicht auf die Innenfläche des Arbeitsendes eines Gelenkteils der Zahnzange gemäß Figur 1.

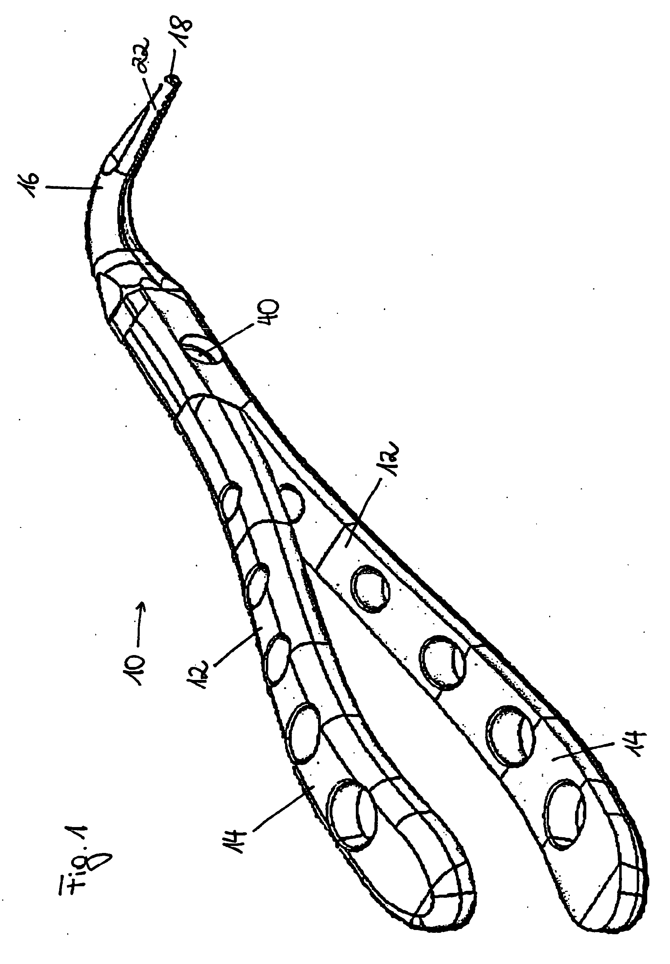

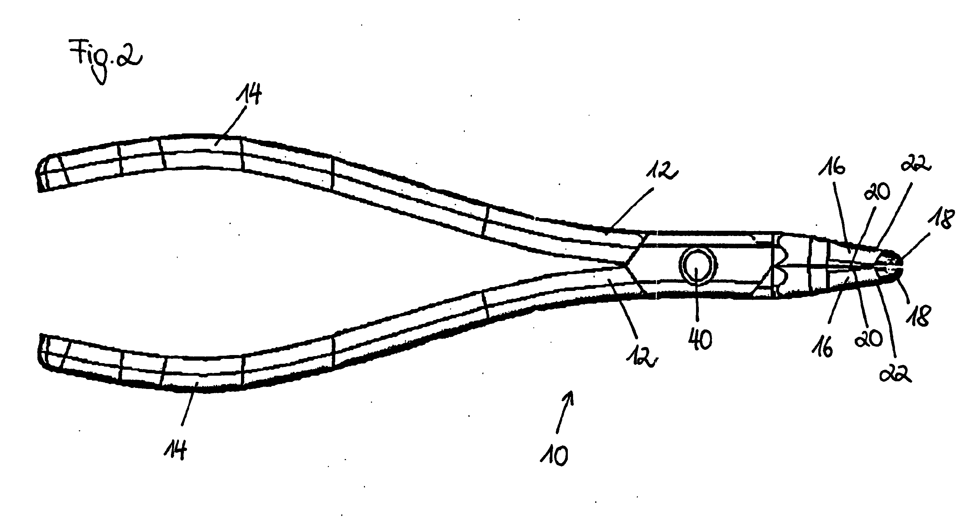

Figur 1 zeigt eine perspektivische Ansicht und Figur 2 eine Draufsicht eines Ausführungsbeispiels einer erfindungsgemäßen Zahnzange 10 mit zwei Gelenkteilen 12, welche über eine Drehachse 40 drehbar miteinander verbunden sind. Jedes der beiden Gelenkteile 12 weist an einem Ende ein Griffelement 14 und an dem jeweils anderen Ende ein Arbeitsende 16 mit einem distalen Ende 18, einer Innenfläche 20, welche im geschlossenen Zustand der Zahnzange 10 auf der Innenfläche 20 des anderen Gelenkteils 12 aufliegt, und einer Außenfläche 22 auf.

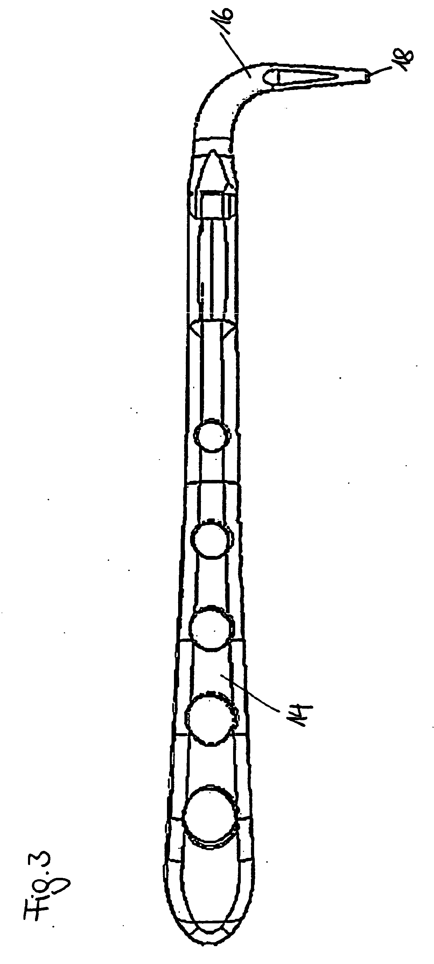

Figur 3 zeigt eine Seitenansicht eines der Gelenkteile 12 der erfindungsgemäßen Zahnzange 10 gemäß den Figuren 1 und 2, bei welchem besonders deutlich zu sehen ist, dass das Arbeitsende 16 um etwa 90 Grad gegenüber der Längsachse des Gelenkteils 12 abgebogen ist. Eine derartige Ausgestaltung des Arbeitsendes 16 ermöglicht einen besseren Zugang zum zu extrahierenden Zahn oder zu zu entfernenden Splittern, bspw. Wurzelspitzen, oder sonstigen Fremdkörpern, insbesondere in der Alveole.

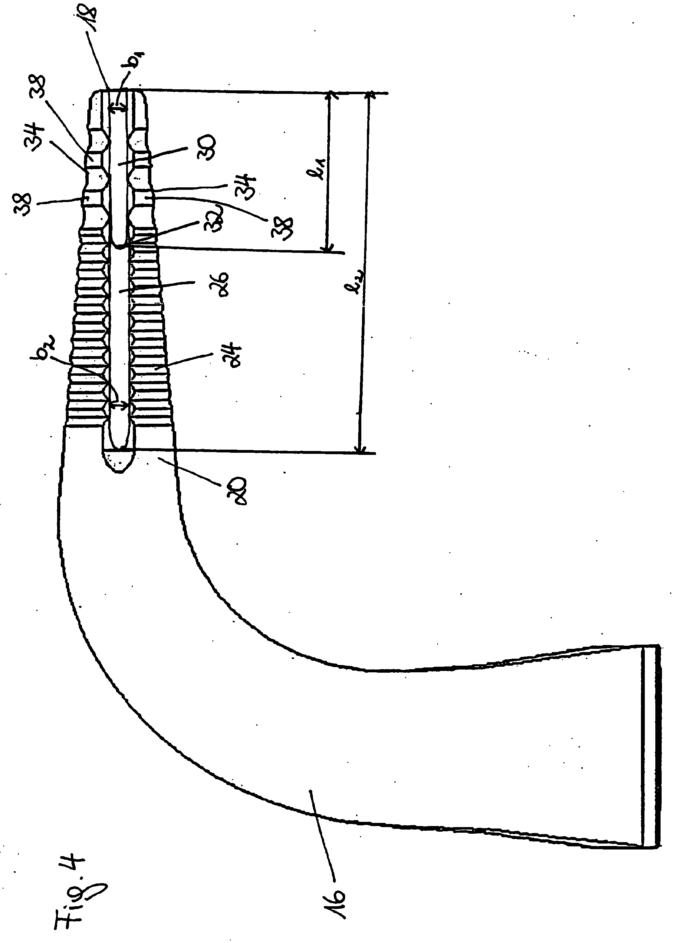

Figur 4 zeigt eine Draufsicht auf die Innenfläche 20 des Arbeitsendes 16 eines der beiden Gelenkteile 12 der erfindungsgemäßen Zahnzange 10, wobei die Arbeitsenden 16 der beiden Gelenkteile 12 zueinander symmetrisch ausgebildet sind. In die Innenfläche 20 des Arbeitsendes 16 ist ausgehend vom distalen Ende 18 eine entlang der Längsachse des Arbeitsendes 16 verlaufende Längsrinne 26 mit einer Länge l₂ und einer Breite b₂ eingelassen. Diese Längsrinne weist einen Krümmungsradius auf, welcher bewirkt, dass die Längsrinne nur sehr schwach konkav gekrümmt und beinahe eben ist.

In die Längsrinne 26 ist ausgehend von dem distalen Ende 18 des Arbeitsendes 16 eine Mulde 30 eingelassen, welche einen Krümmungsradius aufweist, der kleiner ist als der Krümmungsradius der Längsrinne 26. Dabei entspricht der Krümmungsradius der Mulde 30 bevorzugt der Krümmung der Außenfläche eines zu extrahierenden Zahnes, damit der Zahn flächig in der Mulde 30 anliegt, um einen optimalen Kontakt zwischen der Innenfläche der Mulde 30 und der Außenfläche des Zahnes zu gewährleisten. Der Kontakt zwischen der Mulde 30 und dem Zahn ist damit in der Regel ausreichend, um den Zahn extrahieren zu können. Insbesondere ruht der Zahn während des Luxationsvorgangs, bei welchem der Zahn mittels der Zahnzange sowohl um seine Längsachse gedreht als auch zur Wange bzw. zum Gaumen hingekippt und schließlich entlang seiner Längsachse aus der Alveole entfernt wird, fest in der Zahnzange, so dass reitende Bewegungen zwischen Zahn und Zahnzange, bei welchen der Zahn beschädigt werden könnte, vermieden werden.

Die Mulde 30 weist eine Länge l₁ und eine Breite b₁ auf. Erfindungsgemäß ist die Längsrinne 26 nur abschnittsweise mit der Mulde 30 ausgestattet und die Länge l₁ der Mulde 30 beträgt nur etwa ein Drittel der Länge l₂ der Längsrinne 26 . Die Breite b₁ der Mulde 30 entspricht etwa der Breite b₂ der Längsrinne 26.

Vorzugsweise ist die Breite b₁ auf die Breite eines Zahnes abgestimmt. Um den unterschiedlichen Größen der verschiedenen Zähne wie Schneidezähne, Kleinbackenzähne, Großbackenzähne und Weisheitszähne Rechnung tragen zu können, werden dazu mehrere erfindungsgemäße Zahnzangen 10 mit unterschiedlichen Breiten b₁ bereitgehalten. Entsprechend der durchschnittlichen Breite der Zähne können Zahnzangen 10 mit Mulden bereitgestellt werden, deren Breiten b₁ im Bereich von etwa 3 mm bis 7 mm liegt. Die Figuren 1 bis 4 zeigen eine in dieser Hinsicht besonders bevorzugte Ausgestaltung der Zahnzange 10, welche als Wurzel- und Splitterzange ausgebildet ist. Dazu ist die Breite b₁ der Mulde 30 besonders schmal ausgebildet und beträgt nur etwa 2 mm. Dadurch, dass bereits die Ausgestaltung der Mulde 30 durch den an die anatomischen Ausgestaltungen der Zähne bzw. Zahnwurzeln einen ausreichenden Kontakt zwischen zu entfernenden Zahnwurzeln oder Splittern gewährleistet, kann auch die weitere Ausgestaltung des Arbeitsendes 16 besonders schlank und schmal ausfallen, so dass ein leichtes Einführen des Arbeitsendes 16 der Wurzel- und Splitterzange in die Mundhöhle und insbesondere in die Alveole möglich ist, ohne die Alveole zu beschädigen.

Die Mulde 30 weist einen etwa ellipsoidförmigen Übergang 32 zur Längsrinne 26 auf, wodurch eine scharfe Kante, die den Zahn beim Luxationsvorgang beschädigen könnte, vermieden wird.

Die Mulde 30 weist Längskanten 34 auf, in welche ein Wellenschliff mit Zacken 38 eingelassen ist. Dieser bewirkt, dass bei Drehbewegungen der Zahnzange 10 mit dem gefassten Zahn um die Längsachse des Zahnes die Zacken 38 in den Zahn eingreifen und einen sicheren Halt während der Drehbewegungen des Luxationsvorgangs gewährleisten. Bei einer nicht dargestellten Ausführungsform der erfindungsgemäßen Zahnzange 10 verläuft der Wellenschliff am Rand der Mulde 30 in die Mulde 30 hinein. Dadurch werden scharfe Kanten und Übergänge vermieden, welche eine Beschädigung des zu extrahierenden Zahnes herbeiführen könnten, und die Zacken 38 des Wellenschliffs greifen bei Drehbewegungen während des Luxationsvorgangs früher in den Zahn ein und ermöglichen einen sicheren Halt des Zahnes in der Mulde 30 auch während sämtlicher Bewegungen des Luxationsvorgangs.

Der Wellenschliff verläuft ausgehend von dem distalen Ende 18 des Arbeitsendes 16 nur etwa über die Länge l₁ der Mulde 30. Der Abstand zwischen den Zacken 38 beträgt etwa 1 mm, so dass entlang der die Länge l₁ der Mulde 30 etwa zwei bis vier Zacken 38 angeordnet sind. Der vergleichsweise große Abstand zwischen den Zacken 38 ermöglicht beim Luxationsvorgang gegebenenfalls ein Eingreifen der Zacken 38 an oder unter den Zahn, um den Luxationsvorgang zu erleichtern.

An den Wellenschliff schließt sich über die weitere Länge l₂ der Längsrinne 26 auf der Innenfläche 20 des Arbeitsendes 16 quer zur Längsrinne 26 eine Riffelung 24 an, deren Abstände zwischen den einzelnen Zähnen kleiner als der Abstand zwischen den Zacken 28 des Wellenschliffs sind.

### Bezugszeichenliste

- 10: Zahnzange
- 12: Gelenkteil
- 14: Griffelement
- 16: Arbeitsende
- 18: distales Ende
- 20: Innenfläche
- 22: Außenfläche
- 24: Riffelung
- 26: Längsrinne
- 30: Mulde
- 32: Übergang
- 34: Längskante
- 38: Zacken

- l₁: Länge der Mulde
- l₂: Länge der Längsrinne
- b₁: Breite der Mulde
- b₂: Breite der Längsrinne

## Patentansprüche

1. Zahnzange (10) mit zwei Gelenkteilen (12), welche über eine Drehachse (40) miteinander verbunden sind und welche an einem Ende jeweils ein Griffelement (14) und an ihrem anderen Ende jeweils ein Arbeitsende (16) mit einem distalen Ende (18) und einer Innenfläche (20) aufweisen, wobei die Innenfläche (20) eine quer zur Längsachse verlaufende Riffelung (24) aufweist, und wobei in der Innenfläche (20) ausgehend von dem distalen Ende (18) des Arbeitsendes (16) eine entlang der Längsachse des Arbeitsendes (16) verlaufende Längsrinne (26) mit einem Krümmungsradius angeordnet ist,
**dadurch gekennzeichnet, dass** ausgehend von dem distalen Ende (18) in der Längsrinne (26) zumindest abschnittsweise eine Mulde (30) angeordnet ist, deren Krümmungsradius kleiner ist als der Krümmungsradius der Längsrinne (26) und deren Breite (b₁) etwa der Breite (b₂) der Längsrinne (26) entspricht, wobei die Mulde (30) etwa über ein Drittel der Länge (l₂) der Längsrinne (26) verläuft.

2. Zahnzange nach Anspruch 1,
**dadurch gekennzeichnet, dass** die Mulde (30) einen ellipsiodförmigen Übergang (32) zur Längsrinne (26) aufweist.

3. Zahnzange nach einem der vorhergehenden Ansprüche,
**dadurch gekennzeichnet, dass** die Längskanten (34) der Mulde (30) einen Wellenschliff mit Zacken (38) aufweisen.

4. Zahnzange nach Anspruch 3,
**dadurch gekennzeichnet, dass** die Zacken (38) des Wellenschliffs einen Abstand von etwa 1 mm aufweisen.

5. Zahnzange nach Anspruch 3 oder 4,
**dadurch gekennzeichnet, dass** entlang der Mulde (30) etwa zwei bis vier Zacken (38) angeordnet sind.

6. Zahnzange nach einem der Ansprüche 3 bis 5,
**dadurch gekennzeichnet, dass** der Wellenschliff am Rand der Mulde (30) in die Mulde (30) hineinverläuft.

7. Zahnzange nach einem der vorhergehenden Ansprüche,
**dadurch gekennzeichnet, dass** die Zahnzange (10) als Wurzelzange ausgebildet ist.

8. Zahnzange nach einem der vorhergehenden Ansprüche,
**dadurch gekennzeichnet, dass** das Arbeitsende (16) gegenüber der Längsachse der Gelenkteile (12) um 45 bis 90 Grad abgebogen ist.

## Claims

1. Dental forceps (10) comprising two articulated parts (12) which are connected to one another via a pivot (40) and which each have at one end a handle element (14) and at the other end a working end (16) having a distal end (18) and an inner face (20), wherein the inner face (20) has a fluting (24) running transversely to the longitudinal axis, and wherein a longitudinal groove (26) which has a radius of curvature and which runs along the longitudinal axis of the working end (16) is arranged in the inner face (20) proceeding from the distal end (18) of the working end (16), **characterised in that**, proceeding from the distal end (18), a cavity (30) is provided in at least a section of the longitudinal groove (26), the radius of curvature of said cavity being smaller than the radius of curvature of the longitudinal groove (26) and the width (b₁) of said cavity corresponding approximately to the width (b₂) of the longitudinal groove (26), wherein the cavity (30) runs approximately over one-third of the length (l₂) of the longitudinal groove (26).

2. Dental forceps according to claim 1, **characterised in that** the cavity (30) has an ellipsoidal transition (32) to the longitudinal groove (26).

3. Dental forceps according to one of the preceding claims, **characterised in that** the longitudinal edges (34) of the cavity (30) have a serration with points (38).

4. Dental forceps according to claim 3, **characterised in that** the points (38) of the serration are spaced apart by approximately 1 mm.

5. Dental forceps according to claim 3 or 4, **characterised in that** approximately two to four points (38) are arranged along the cavity (30).

6. Dental forceps according to one of claims 3 to 5, **characterised in that** the serration at the edge of the cavity (30) runs into the cavity (30).

7. Dental forceps according to one of the preceding claims, **characterised in that** the dental forceps (10) are configured as root forceps.

8. Dental forceps according to one of the preceding claims, **characterised in that** the working end (16) is bent by 45 to 90 degrees relative to the longitudinal axis of the articulated parts (12).

## Revendications

1. Pince pour dent (10) comportant deux branches articulées (12) qui sont reliées par un axe de rotation (40) et comportent respectivement à l'une de leurs extrémités un élément de préhension (14) et à leur autre extrémité une extrémité de travail (16) ayant une extrémité distale (18) et une surface interne (20), cette surface interne (20) comportant un cannelage (24) s'étendant transversalement à l'axe longitudinal, ainsi qu'un canal longitudinal (26) s'étendant à partir de l'extrémité distale (18) de l'extrémité de travail (16) le long de l'axe longitudinal de cette extrémité de travail (16) et comportant un rayon de courbure,
**caractérisée en ce qu'**
à partir de l'extrémité distale (18), le canal longitudinal (26), comporte au moins par section, une cavité (30) dont le rayon de courbure est inférieur au rayon de courbure du canal longitudinal (26) et dont la largeur (b1) correspond essentiellement à la largeur (b2) de ce canal longitudinal (26), cette cavité (30) s'étendant essentiellement sur un tiers de la longueur (l₂) du canal longitudinal (26).

2. Pince pour dent conforme à la revendication 1,
**caractérisée en ce que**
la cavité (30) comporte une transition ellipsoïdale (32) vers le canal longitudinal (26).

3. Pince pour dent conforme à l'une des revendications précédentes,
**caractérisée en ce que**
les arêtes longitudinales (34) de la cavité (30) comportent un meulage à ondulations muni de dents (38).

4. Pince pour dent conforme à la revendication 3,
**caractérisée en ce que**
les dents (38) du meulage à ondulations sont distantes d'environ 1 mm.

5. Pince pour dent conforme à la revendication 3 ou 4,
**caractérisée en ce qu'**
environ deux à quatre dents (38) sont situées le long de la cavité (30).

6. Pince pour dent conforme à l'une des revendications 3 à 5,
**caractérisée en ce que**
le meulage à ondulations s'étend du bord de la cavité (30) jusqu'à la partie interne de cette cavité.

7. Pince pour dent conforme à l'une des revendications précédentes,
**caractérisée en ce qu'**
elle est réalisée sous la forme d'une pince pour racines.

8. Pince pour dent conforme à l'une des revendications précédentes,
**caractérisée en ce que**
l'extrémité de travail (16) est recourbée de 45 à 90° par rapport à l'axe longitudinal des branches articulées (12).
